# EUROPEAN PATENT APPLICATION

(11) **EP 4 513 700 A2**
(43) Date of publication of application: **26.02.2025**
(21) Application number: 24190495.2
(22) Date of filing: 24.07.2024
(51) Int. Cl.: H02J 3/14, H02J 3/38, H02J 13/00

(54) **METHOD AND SYSTEM FOR CONFIGURING AN ELECTRICAL GRID**

(30) Priority: 21.08.2023 US 202318452693
(71) Applicant: Caterpillar, Inc., Peoria, IL 61629-6450 (US)
(72) Inventor: REDDY, Suresh B., Peoria, 61615 (US); CHATTERJEE, Srideep, 462024 Bhopal (IN); SERGOTT, Kevin J., Dunlap, 61525 (US); NAGESH, Sowmya, Peoria, 61615 (US)
(74) Representative: Wagner & Geyer

(57) **Abstract**

A method of configuring a microgrid (100) including: receiving configuration inputs (202) from an operator, the configuration inputs (202) including an intended bus structure, a plurality of energy resources data, and energy resources priorities; classifying assets and asset groups based on the plurality of energy resources data; and generating a microgrid (100) configuration based on the one or more configuration inputs (202), the microgrid (100) configuration providing for automatic operation of the microgrid (100).

## Description

### Technical Field

The present disclosure relates generally to control of an electrical grid, and more particularly, to systems and methods for configuring and automatically operating a microgrid.

### Background

Microgrids have emerged as a possible solution to problems of stability, reliability, and sustainability of electrical power systems. Generally, a microgrid is a localized energy system (for a local work site or other site, for example) that integrates various distributed energy assets (or just "assets" or "resources"), such as photovoltaic (PV) assets, wind turbines, energy storage systems and devices (ESS), and backup generators (gensets), to operate either connected to or independently from a main power grid (e.g., powered by an electric utility). Microgrids offer benefits such as improved energy efficiency, reduced carbon emissions, enhanced resilience, and increased utilization of renewable energy sources.

Despite their numerous potential advantages, configuring microgrids for operation and then operating them can be challenging. One significant challenge is configuring the microgrid for optimized performance (i.e., optimized operation of the microgrid). Because of the individual, unique energy requirements and other aspects of a site and of competing economic, environmental, and regulatory priorities ensuring efficient energy management for any particular microgrid can be difficult. Operators must carefully balance the supply and demand within the system based on requirements and priorities. Achieving this balance requires advanced control strategies and sophisticated algorithms to coordinate the operation of multiple assets providing power to multiple dynamic loads in real-time. Factors influencing operation can include electricity generation capabilities, load demands, storage capacity, and grid connectivity. Additionally, microgrids may be configured and operated based on site-specific requirements for connectivity, sustainability, and availability of power. Each site requiring a microgrid may also require customized or specialized software for these site-specific requirements, which can be expensive and time-intensive.

Prior art in microgrid technology includes approaches to address the challenges mentioned above. U.S. Patent No. 11,128,141 ("the '141 patent"), for example, describes a control system for a microgrid for the production and distribution of electric power coming from multiple electric power sources. According to the reference, the system is used for production and distribution of electric power coming from multiple production sources of different types, the system prioritizes the sources according to the requirement and set points. However, the reference does not mention anything about optimizing a range of power for one or more assets or groups of assets or configuring a microgrid based on site-specific requirements.

The systems and methods for configuration of an electrical grid of the present disclosure may solve one or more of the problems set forth above and/or other problems in the art. The scope of the current disclosure, however, is defined by the attached claims, and not by the ability to solve any specific problem.

### Summary

In one aspect, a method of configuring a microgrid includes: receiving configuration inputs from an operator, the configuration inputs including an intended bus structure, a plurality of energy resources data, and energy resources priorities; classifying assets and asset groups based on the plurality of energy resources data; and generating a microgrid configuration based on the one or more configuration inputs, the microgrid configuration providing for automatic operation of the microgrid.

In another aspect, a configurable microgrid includes an electrical bus including: a plurality of assets configured to provide electrical energy to the configurable microgrid; at least one electrical load for receiving electrical energy from the configurable microgrid; an interface for receiving one or more configuration inputs; a system controller including a processor and a memory storing one or more instructions. When executed by the processor, the instructions cause the configurable microgrid to: receive the configuration inputs from an operator, the configuration inputs including an intended bus structure, a plurality of energy resources data, and energy resources priorities; classify assets and asset groups based on the plurality of energy resources data; and generate a microgrid configuration based on the one or more configuration inputs, the microgrid configuration providing for automatic operation of the microgrid.

In yet another aspect, a method of configuring a microgrid includes receiving configuration inputs from an operator, the configuration inputs including an intended bus structure, an automatic operating modes input, a load types input, an asset type properties input, an asset groups and setpoints input, an asset priorities input, and a tie breaker status input; classifying assets and asset groups based on the configuration inputs; and generating a microgrid configuration based on the one or more configuration inputs, the microgrid configuration providing for automatic operation of the microgrid.

### Brief Description of the Drawings

The accompanying drawings, which are incorporated in and constitute a part of this specification, illustrate various exemplary embodiments and together with the description, serve to explain the principles of the disclosed embodiments.
FIG. 1A is a schematic illustration of a configurable microgrid according to one or more aspects shown and described herein.
FIG. 1B is a specific example of the configurable microgrid of FIG. 1A.
FIG. 1C is a schematic illustration of an exemplary energy resource group that could be on the configurable microgrid of FIG. 1A.
FIG. 2 is a controller for controlling the configurable microgrid of FIG. 1A.
FIG. 3 is a flowchart depicting aspects of a method for configuring a microgrid, such as the microgrid of FIG. 1A.
FIG. 4 is an exemplary display of a microgrid schematic of a configurable microgrid, such as the microgrid of FIG. 1A.

### Detailed Description

Both the foregoing general description and the following detailed description are exemplary and explanatory only and are not restrictive of the features, as claimed. In this disclosure, unless stated otherwise, relative terms, such as, for example, "about," "substantially," and "approximately" are used to indicate a possible variation of ±10% in the stated value.

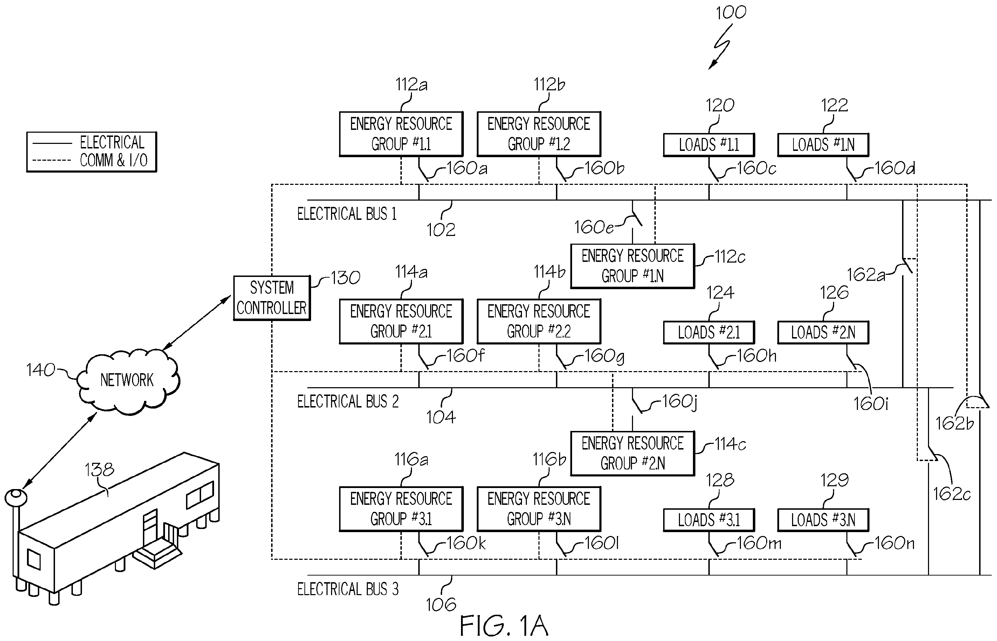

FIG. 1A depicts an exemplary microgrid configuration system 10 for a microgrid 100 requiring configuration. The microgrid 100 includes exemplary assets and loads (or "sources" and "sinks," respectively) configured to electrically couple to electrical bus 1 102, electrical bus 2 104, and electrical bus 3 106. The electrical buses 102, 104, 106 are each isolable from one another and can be closed or open to form any architecture. The microgrid 100 can be configured to be electrically powered by a utility grid 110 and any number of local energy resource groups. As shown, the microgrid 100 includes a first energy resource group 112a, a second energy resource group 112b, a third energy resource group 114a, a fourth energy resource group 114b, and a fifth energy resource group 116a, an Nth energy resource group 112c, and an Nth energy resource group 114c, and an Nth energy resource group 116b. The use of Nth energy resource groups here is intended to symbolize that the number and make up of energy resource groups on any given bus can vary in number and type and that embodiments are not limited to features shown in the exemplary figures of this application.

Each of the energy resource groups (or "sources," "resources") can have one or more electrical assets incorporated therein. In some embodiments, the energy resource groups will have one type of energy resource within the energy resource group or may have multiple types of energy resources within the group and will be classified and used based on the type of asset within the group. For example, an energy resource group can include all renewable energy, renewable and non-renewable assets, all energy storage assets, energy storage assets and non-energy storage assets, etc. Assets can include, without limitation, a utility grid (e.g., a public utility grid), photovoltaic (PV) systems, fuel cell assets, wind turbine assets, gensets, energy storage systems (ESS) (e.g., batteries), and other types of electrical assets. As used herein, the term "asset" generally refers to sources of power and each of the energy resource groups can be individual assets or groups of assets with common properties (e.g., asset type or operating characteristics). For example, an energy resource group may include multiple PV cells, multiple wind turbines, etc. The assets can provide either real and/or reactive power. Each of the electrical buses can have any combination of energy resource assets associated with it. For example, the electrical bus 1 102 can have renewable energy resources, non-renewable energy resources, an electrical grid, energy storage assets, and other energy resources associated with it in various energy resource groups.

Additionally, the microgrid 100 can include various loads on each of the buses. For example, the first electric bus may include a first load 120 and an Nth load 122, the second electric bus 104 may include a third load 124 and an Nth load 126, and the third electric bus 106 can include a fifth load 128 and an Nth load 129. The use of "Nth" here to describe loads symbolizes that loads and can vary on any given bus in number and type.

As used herein, electrical load (or "sink") generally refers to any equipment or other feature of a work site configured to receive electrical power. For example, a load can be a piece of heavy machinery (e.g., electrified truck, etc.), an electric turbine, an ESS, or other item or equipment requiring electrical power. The loads can require either real and/or reactive power.

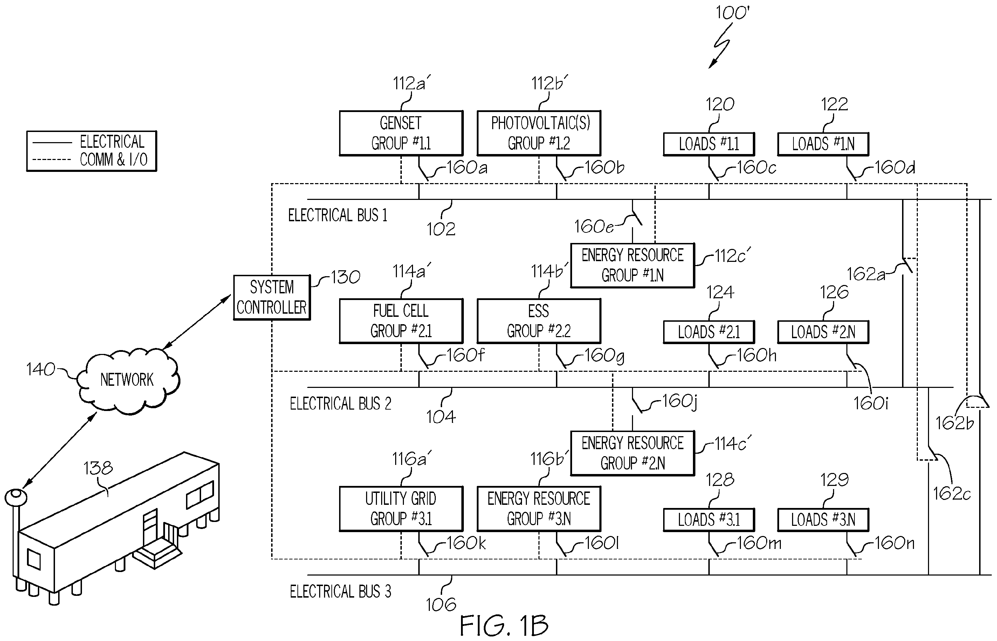

Additionally, while FIGS. 1A/1B are depicted including three buses, it is understood that the scope of this disclosure includes a microgrid having different numbers and types of assets and loads.

The energy resource groups (or "asset groups"), loads, and breakers can be controllable, at least in part, by one or more controllers. The microgrid 100 may have a system controller 130 that may be capable of controlling one or more of the energy resource groups, loads, or other components of the microgrid 100. For example, in some embodiments, the system controller 130 may control one or more breakers 160a-160n to open or close the breakers, placing energy resource groups and/or loads on the microgrid 100. Additionally, the system controller 130 may control the opening or the closing of one or more tie breakers 162a, 162b, 162c to open or close tie breakers between the individual buses to electrically connect the buses. Each of the buses 102, 104, 106 may form its own electrical grid when isolated from the others. Further, two of the buses may form an electrical grid separate from the other bus. The system controller 130 may be connected to a back office 138 via a network 140 (e.g., a cloud network).

The multiple breakers 160a-160n selectively connect buses, electrical assets, and electrical loads. The breakers may be circuit breakers that connect two buses or sections of an electrical bus serving different power sources or different electrical buses. When closed, current can pass in either direction between them, flowing from source(s) to sink(s). Each breaker is associated with the two electrical buses or portions of a bus it connects. For example, bus 102 and 104 may be connected, but not 104 and 106 nor 102 and 106. In this formation, bus 102 and bus 104 would form one portion of microgrid, and electrical bus 106 would form a separate portion. In such a case, one of the energy resource group controllers (e.g., energy resource group controller 132) on bus 102 and 104 could serve as the microgrid controller for the portion formed by those two buses and an energy resource group controller on bus 106 could serve as the microgrid controller for the portion formed by the bus 106. The separate portions could also be controlled by other controllers connected to the bus, for example, the system controller 130.

The microgrid system controller 130 may communicate at the energy resource group controller level or may communicate with individual asset controllers. The system controller 130 can be located anywhere. For example, the system controller 130 can be located on site (e.g., in the back office 138) or remotely. The back office 138 can include one or more interfaces for an operator to input configuration inputs to configure the microgrid. In some embodiments, the back office 138 may also receive operational inputs and provide interfaces to view one or more configuration or operational outputs (e.g., on a display configured to display monitor microgrid operation).

The network 140 can be, for example, a wired or wireless network, Wi-Fi, or a cellular network that includes a plurality intercommunication devices (e.g., modems, Wi-Fi, cellular devices, etc.) The network 140 can include one or more satellites and one or more ground stations (e.g., the back office 138), wherein the ground stations may be configured to wirelessly communicate to transmit and receive data from the satellites.

FIG. 1B depicts a specific embodiment of a microgrid 100' including specific energy resource groups including a genset group 112a', a photovoltaic group 112b', an Nth energy resource group 112c', a fuel cell group 114a', an ESS group 114b', and an Nth energy resource group 114c', a utility grid group 116a', and an Nth energy resource group 116b'. The use of specific types of assets and "Nth" assets on the electrical buses 102, 104, and 106 of FIG. 1B is intended to show that the buses can utilize any type or number of assets on the bus and embodiments are not limited to that shown in FIG. 1B.

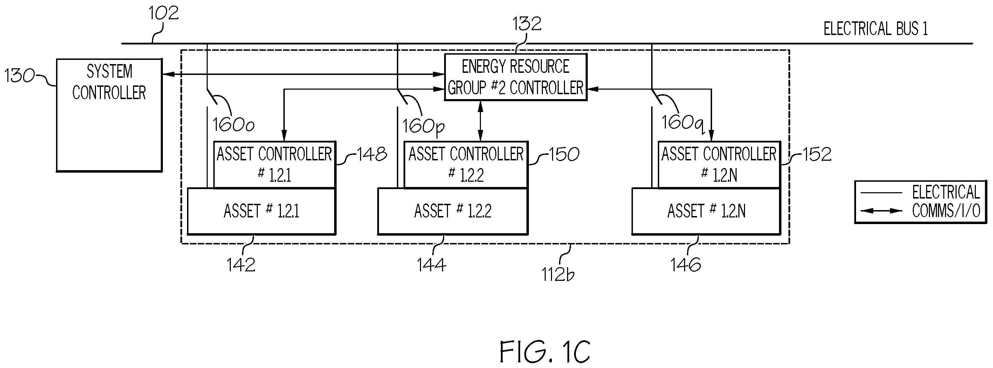

Referring to FIGS. 1A and 1C, the energy resource groups (or "energy resource groups") and loads can be controllable, at least in part, by one or more local controllers, which may be communicatively coupled to the system controller 130. For example, the system controller 130 may control local controllers such as the energy resource group controller 132 of FIG. 1C. The energy resource group controller 132 of FIG. 1C is exemplary of any of the energy resource groups of FIGS. 1A and 1B and the features shown could be applied to other energy resource groups.

FIG. 1C shows the interrelation between the system controller 130 and the individual energy resource group controllers. Specifically, FIG. 1C shows the interrelation between the system controller 130 and the second energy resource group 112b controller 132, but the principles of operation between the system controller 130 and the energy resource group controller 132 can be applicable to the other energy resource group controllers and those of the Nth energy resource group(s). In order to configure a microgrid for operation, the system controller 130 must identify buses, groups of assets and loads, and individual assets and loads according to their asset/load type and other factors. FIG. 1C shows one example of a system for identifying and assigning identifying labels to individual assets within a group of assets.

In FIG. 1C the second energy resource group 112b includes a first asset 142, a second asset 144, and an nth asset 146, which may have individual asset controllers 148, 150, 152, respectively. To configure the microgrid, assets may be grouped according to the types of energy resources needed for the particular site. For example, energy resource groups on any given bus may include assets of the same type (e.g., with similar characteristics and capabilities) or of a different type. The assets can then be identified using, for example, a serial number. Referring to FIGS. 1A and 1C, the assets can be serialized according to the bus and the energy resource group to which they belong. For example, for assets on electrical bus 1 102, the assets may be given the designation "1" (or any other character) in the bus digit of their nomenclature. For assets in the second energy resource group 112b, the assets may receive a "2" in the energy resource group digit. The assets may then be serialized based on their bus and group number. So for the first asset on the first bus 102 and in the second energy resource group 112b, the asset could be serialized 1.2.1, then 1.2.2, and so on up to 1.2.N.

Loads may be similarly serialized in the microgrid configuration and control system and tracked based on their serialized nomenclature. Similarly, tie breakers may be serialized and tracked in order to identify and control tie breakers to open and shut breakers. Tie breakers between individual assets or loads or energy resource groups or load groups may be opened or closed to an electrical bus by the resource group or individual resource controller individually or based on requests by the system controller 130.

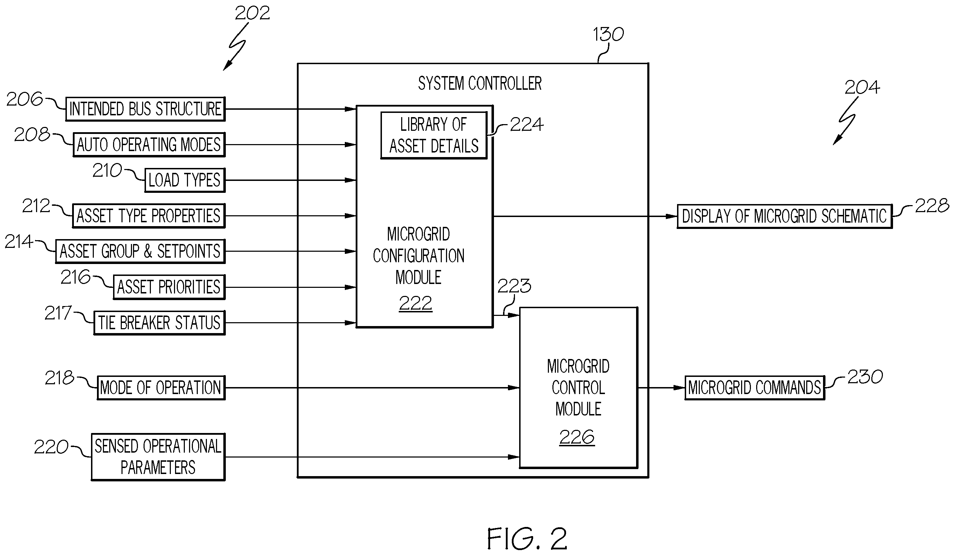

FIG. 2 depicts the system controller 130 in greater detail. The system controller 130 can receive inputs 202 and generate outputs 204 to various modules including a microgrid configuration module 222 and a microgrid control module 226. The inputs 202 can include configuration inputs and operational inputs. The configuration inputs may include an intended bus structure input 206, an auto operating mode input 208, a load type input 210, an asset type properties input 212, an energy resource group and setpoints input 214, an asset priorities input 216, and a tie breaker status input 217. The operational inputs can include a microgrid configuration output from the microgrid configuration module 222, a mode of operation input 218, and a sensed operational parameters input 220. In general, the inputs 202 may be generated by a system operator (human) for example, at the back office 138, or remotely, or some inputs may be generated and/or determined by the system controller 130 itself. In some embodiments, the system controller, group asset controllers, or individual asset controllers can be on site outdoors or indoors (office) or connected via network remotely. The inputs can be input using, for example, a human machine interface (HMI), and can be input in response to question prompts from system controller 130. Additionally, it is to be noted that, while FIG. 1C depicts a single controller, the functions described with respect to the system controller 130 could be distributed amongst a plurality of controllers.

The system controller 130 can include a memory, a secondary storage device, and processor(s), such as central processing unit(s), networking interfaces, or any other means for accomplishing tasks consistent with the present disclosure. The memory or secondary storage device associated with the system controller 130 may store data and software to allow the system controller 130 to perform its functions, including the functions described below with respect to method 400 and the functions of the microgrid configuration and control system described herein. One or more of the devices or systems communicatively coupled to the system controller 130 may be communicatively coupled over a wired or wireless network, such as the Internet, a Local Area Network, WiFi, Bluetooth, or any combination of suitable networking arrangements and protocols.

The microgrid configuration module 222, can include a library of asset details 224, and a microgrid control module 226. The outputs 204 may be configuration outputs and operational outputs and can include a configuration outputs of a display of the microgrid schematic 228, an output of the microgrid configuration 223 itself, and the operational outputs can include one or more microgrid commands 230, which may generally cause the microgrid to make one or more changes to its structure as discussed in greater detail herein.

The system controller 130 can control the system to operate in one of multiple general modes of operation. The general modes of operation can include, without limitation, "off," "not in control," "manual control," and "automatic control." In the automatic control mode, the system controller 130 may receive the one or more system inputs 202 to generate the outputs 204 to configure and operate the microgrid 100 under automatic control.

The configuration inputs and the library of asset details 224 can be combined with configuration software in the microgrid configuration module 222 to create a specific microgrid configuration for a particular microgrid setup at a job site. This may allow users to setup and / or configure a microgrid for operation quickly without the need for specialized software unique to any particular job site.

The intended bus structure input 206 is used to define the intended structure of the one or more buses of the microgrid 100. The input can include data related to, for example, the number of assets and loads associated with each bus, how buses are connected to one another, and other information. The input may include information about a bus such as a total amount of power available on a bus (e.g., based on a power availability for a given asset (e.g., a genset on the bus) and a number of the given assets available on the bus (e.g., five gensets available x 100 kW each = 500 kW available)). In some embodiments, the bus structure input 206 may include parameters related to a transient load reserve, which may refer to an amount of power available in reserve in the case of significant transients, a list of load breakers associated with the bus structure, a load type for each breaker on a particular bus, the energy resource groups associated with the bus and the assets within each group, the individual asset parameters for an asset on the bus, an asset type for each energy resource group, and an input from power meters associated with the bus.

The auto operating mode input 208 can be an operating modes input that puts the microgrid 100 into a mode of automatic operation that prioritizes one or more aspects of microgrid operation based on the specific needs of an operator of the microgrid 100 (e.g., a customer). The needs of the operator may generally be based on cost and other factors associated with planning operations of a microgrid. The auto operating mode input 208 may have multiple mode settings, for example, which give an operator a quick capability to set the operating mode of the entire microgrid, which settings may priorities operation of the various assets and loads on the grid.

The modes can include, without limitation, a renewables penetration mode, an economic mode, an emissions mode, an optimized resiliency mode, and a redundancy mode. In the renewables penetration mode, the microgrid may be configured such that, all other factors being equal, renewable sources of energy (e.g., PV cells, wind turbines, etc.) are used for the maximum production of power for loads at the site. That is, the percent share of power produced by renewable assets, as compared with the power produced by all assets, is maximized. In the economic mode, the microgrid may be configured such that, all other factors being equal, the microgrid is operated at a lowest cost of energy production (e.g., using an ESS as a source of power to reduce the cost of electricity supplied by a public utility grid, etc.) In the optimized resiliency mode, the microgrid may be operated such that, for example, assets are able to be added to the microgrid 100 quickly (e.g., assets may be operated in a standby mode without being fully shut down, etc.) In the redundancy mode, additional assets may be placed on the microgrid than are strictly required for the level of load on the microgrid. Such mode may be required, for example, if regulations require redundant sources of electrical power for a given load (e.g., nuclear coolant pumps, etc.)

The load type input 210 can be based on a type of load required for the given microgrid. For example, if the microgrid will include loads with large reactive powers or large real power draws. The load type may be defined globally for an entire site or microgrid and may include intrinsic and application specific properties. In some embodiments, the load type input 210 may rank loads within a hierarchy according to their criticality. For example, loads may be ranked according to priorities as most critical (enumerated as "1" in some embodiments), essential (enumerated as "2" in some embodiments), important but deferrable (enumerated as "3" in some embodiments), and optional (enumerated as "4" in some embodiments).

The asset type properties input 212 can be energy resources data that is based on one or more asset-specific parameters related to the operation of the asset. For example, a rated load or rated load range (minimum/maximum power) of the asset, a desired load or desired load range (minimum/maximum desired power) for the asset, an optimal load or optimal load range (minimum/maximum "sweet spot" range) for the asset or other asset properties. The asset type properties input 212 can include properties such as whether the asset is a fast add asset and the threshold for fast adding or adding an asset to the grid. If an asset is a fast add asset, it may be added to the grid without a need for explicit set points, which features may be used to increase grid resiliency and/or redundancy of assets quickly.

Other aspects of the asset type properties input 212 can include whether the asset is a grid forming or a grid following asset. Grid forming assets are generally those assets which can provide sufficient real and reactive power at sufficient levels to maintain a desired frequency (e.g., 60 Hz) and voltage on the formed microgrid during periods of the individual grid's maximum electrical transient. Grid following assets may be those assets which are not capable of maintaining frequency and voltage, but nevertheless, can provide electrical power to the grid, especially when placed on the grid in an auxiliary capacity. In general, a public utility will form the grid if it is connected to a microgrid, but not necessarily. Other grid forming assets include gensets and ESSs given a sufficient state of charge (SOC) of the ESS. Grid following assets can include renewable sources of energy (due to their inherent intermittency) and an ESS without a sufficient SOC.

Other aspects of the asset type properties input 212 can include whether an asset is a prime asset or a backup asset, whether an asset is allowed to operate on a bus individually or whether it must be operated redundantly, and how long an asset can take to bring online. In some embodiments, the asset type properties input 212 can include features of the asset such as, for example, total running hours, a state of health, and a state of energy estimation.

The energy resource group and setpoint input 214 can be energy resources data which may be defined at an electric bus level, and each microgrid can, as discussed above, include multiple buses. Within an energy resource group, there may be individual assets with their own individual identifiers (for example, as shown with the individual asset controllers 148, 150, 152 of FIG. 1C). At any given site, there may be energy resource groups with the same type of asset and the energy resource group and setpoint input can distinguish between energy resource groups of the same asset type (e.g., two different groups of gensets at the same site). Control of assets of the same group may be via an energy resource group controller and not all assets of the same type will be in the same group. That is, there may be more than one energy resource group controller for different groups of assets of the same type. Additionally, set points for individual assets and/or energy resource groups may not be the same across different individual assets or energy resource groups, even if the individual assets or energy resource groups have the same asset type. Setpoints for different groups may vary from group to group, or bus to bus, or day to day for same site. In some embodiments, priorities may be specified at a group level instead of type level globally, but in some embodiments, priorities may be specified at type level for easier set up/management, which may require some additional cost.

The asset priorities input 216 can be energy resources priorities and can be based on an order of priority of the various assets of the microgrid as determined based on operator requirements. The asset priorities input 216 can be used to rank the assets in order of priority for being placed on the grid in order to provide electrical power thereto. Operators of the microgrid may prefer to configure grids such that assets of a certain type or with particular characteristics are prioritized over others. For example, renewable assets may be prioritized above non-renewable sources of energy based on, for example, a requirement for reduced cost or a regulatory requirement for a higher penetration of renewables. In some embodiments, the asset priorities input 216 may include a cost function map for each of the assets and/or asset types. The cost function map may generally give a cost of operating the asset on the microgrid based on various factors such as, for example, time of day, total load of microgrid, type of asset, fuel used by the asset, and other factors. In embodiments, the cost function map may be updateable based one or more external connections such that as the cost of various sources of energy or other factors changes, the cost function can change accordingly. In general, assets may be operated to minimize cost, but this is merely one factor and the microgrid may be configured for operation according to other factors that take precedence over cost for any given asset or for the microgrid 100 as a whole.

The tie breakers status input 217 can serve as an input to provide the microgrid configuration module 222 information relating to the status of the electrical switches that are connecting the various loads and energy resources on or available to the microgrid. The tie breaker status input 217 may indicate whether any particular breaker is openable, closeable, open or closed. For example, the tie breaker status input 217 can have inputs with respect to a tie breaker between any of an individual energy resource, and energy resource group, a utility grid, or any individual or group of loads. In some embodiments, tie breaker status (i.e., open or closed) could also alternatively be an input to the control module.

As noted above, the microgrid configuration module includes a library of asset details that can supplement the configuration inputs and/or provide some or all of a particular configuration input. The library of asset details 224 can include asset and load properties (e.g., nameplate details relating to the characteristics (e.g., number of phases, rated operating voltage, service duty, efficiency, insulation class, etc.) and performance of the equipment (e.g., motor)). Libraries may be standard across different microgrids or may be individually programmed for a particular grid. For example, an operator may program a microgrid for a given site based on the assets and loads at the site. In some embodiments, the library of asset details 224 may be programmed before a microgrid is formed and/or the site is set up. Generally, features of the site which are specific thereto will be maintained in the library of asset details 224 and updated for the particular site. Additionally, the library of asset details may include one or more libraries of pre-defined microgrid configurations, offering standardized settings or previously optimized configurations for specific applications or scenarios. The assets and loads contained in the library may be fully customizable, repeatable, and adaptable for various conditions. Additionally, the library can be formed and stored by an operator based on the configuration inputs 202.

Based on the bus structure input 206, the auto operating mode input 208, the load type input 210, the asset type properties input 212, the energy resource group and setpoint input 214, the asset priorities input 216, the tie breaker status input 217, and the library of asset details 224, the microgrid configuration module 222 may generate a microgrid configuration 223 that may be a module output that may serve as an input to the microgrid control module 226 for controlling the microgrid during its automatic operation as explained in greater detail herein.

Once the microgrid configuration 223 has been created, the operation of the microgrid may commence based on the operational inputs 218, 220. The mode of operation input 218 can include a mode of operation of the microgrid 100 and can be input by an operator of the microgrid 100 based on the desired mode of operation. The operator may use an I/O device (e.g., a touch screen) or other device to input the mode of operation. As noted above, the modes of operation can include, without limitation, "off," "not in control," "manual," and "auto."

The sensed operational parameters input 220 can be parameters generated by the start-up and operation of the microgrid 100 (e.g., bus voltage, bus frequency, power factor, etc.) and/or feedback from the microgrid 100 itself based on the real-time aspects and operation thereof. For instance, various loads may be started and/or stopped on the microgrid 100 during operation thereof and aspects of the additional load or loss of load may be sensed and used as an input to the microgrid controller. In some embodiments, the sensed operational parameters input 220 can include a net load calculation from all of the various loads on the microgrid.

Based on the mode of operation input 218, the sensed operational parameters input 220, and the microgrid configuration 223 provided by the microgrid configuration module 222, the system controller 130 may generate the one or more microgrid commands 230 to control the microgrid 100 (e.g., shut breakers to bring on one or more loads, open breakers to reduce loads, etc.) In embodiments, outputs of the system controller 130 may be sent to the one or more energy resource group controllers or individual asset controllers as appropriate to control energy resource groups (e.g., energy resource groups 112, 114, 116) or individual assets (e.g., assets 142, 144, 146) locally.

### Industrial Applicability

The disclosed aspects of the systems and methods for configuration of a microgrid of the present disclosure may be used in conjunction with any appropriate microgrid or electrical grid system. The disclosed system could be used, for example, in any microgrid site to configure the microgrid for operation and to automatically operate the microgrid.

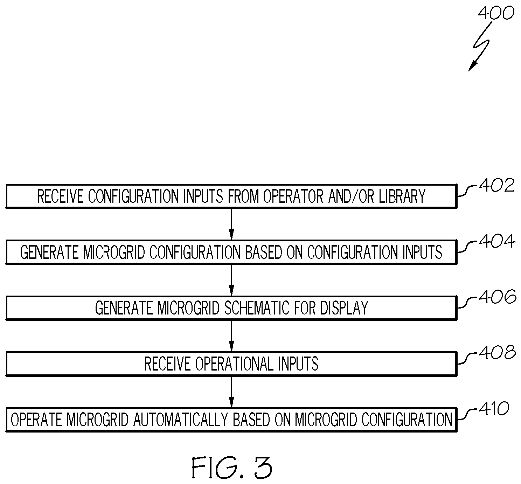

FIG. 3 shows a method of configuring a microgrid and of operating the microgrid based on the configuration 223. It is to be understood that the method described in FIG. 3 is exemplary and that other steps of the method may be added or subtracted without departing from the scope of the claims of the application.

At step 402, the system controller 130 may receive configuration inputs 202 from an operator and/or the library of asset details 224. The configuration inputs may include the bus structure input 206, the auto operating modes input 208, the load types input 210, the asset type properties input 212, the energy resource group & setpoints input 214, and the asset priorities input 216. As noted above, the configuration inputs can be received from an operator (via inputs) and/or a retrieved from a pre-existing library via the library of asset details 224 of FIG. 2. The operator may also provide via inputs information such as desired energy generation sources, load requirements, storage capacities, and connectivity preferences. Asset properties can include information such as whether the asset is an energy storage asset, a hybrid energy storage asset, a renewable energy source, a non-energy storage asset, an intermittent asset, a fuel source or fuel type for the asset (e.g., diesel, natural gas, biomass, hydrogen, blend, etc.), whether the asset is renewable or not, whether the asset is clean or zero emissions, whether the asset is capable of forming a grid, whether the asset is an inverter based source, and other intrinsic properties of the asset. The configuration inputs 206-217 serve as the foundation for generating the microgrid configuration 223.

At step 404, the microgrid configuration 223 may be generated based on configuration inputs 206-217. In embodiments, the configuration inputs 206-217 can be combined with configuration software stored in the configuration module 222 and, in some embodiments, the library details 224 to generate the microgrid configuration 223. This process can take place in microgrid configuration module 222 and involve analyzing the configuration inputs 206-217 to determine the optimal arrangement and settings for the microgrid components, including any assets which may be connected to the microgrid such as PV assets, wind turbines, ESS, and gensets. The microgrid configuration 223 includes the assets and loads on each bus and may assign a bus as grid forming and other buses as grid following and/or grid enhancing. For example, in embodiments in which the utility grid is connected to the microgrid, the assets on the buses connected to the bus hosting the microgrid may enter a grid following mode because the utility grid can be assumed to operate at the ideal frequency and potential, even in the face of large transients. However, in grids configured for operation without connection to a utility grid, the assets capable of grid forming (i.e., with a grid forming property) configured in the microgrid may be selected as the grid forming asset(s). For example, a genset may be selected as the grid forming asset. The gensets may be selected as the grid forming asset based on their relatively robust capability to control potential and frequency on the microgrid, as compared with, for example, a group of PV systems, which may lose a capability to form a grid depending on a loss of light.

In configuring the microgrid, the system may first determine a number of buses and assign a name to each bus. In the exemplary embodiment shown in FIG. 1C, the bus may take the first digit in a three digit serialization (e.g., "X.1.1"). The bus structure forms the skeleton of the microgrid and each bus is tied to the grid by one or more breakers. The breakers are then determined within the system. The breakers may have individual controllers or may be controlled by a controller on an energy resource group controller or an asset controller near the breaker. With the buses assigned and separated based on the tie breakers, the system may determine a number and type of assets on each bus and where the energy resource groups reside on each of the buses. In some embodiments, the system may serialize each asset or energy resource group. In some embodiments, the type of asset may be apparent based on the name and/or serial assigned to the asset. For example, a name of the asset in the system may include one or more details about the asset (e.g., whether the asset is intermittent, whether the asset is renewable, the type of fuel, etc.) The system may then layout the load groups for each bus. The system may determine a number of loads for any given bus, a load type (e.g., load type 1, 2, 3, or 4 as discussed above).

At step 406, the microgrid schematic may be generated for display. The microgrid schematic can include each of the loads, assets, ties, and breakers of the grid in a visually digestible form that can be presented to an operator of the microgrid such that he or she can determine whether the microgrid is operating correctly, whether any actions need to be taken with respect to the microgrid, etc. In some embodiments, the individual assets, loads, and other features of the grid can have representational icons. The feature icons can be stored in a library of images and displayed to a user. The microgrid schematic can be dynamic and change with the microgrid operation. In some embodiments, the microgrid schematic may automatically update as the microgrid operates and may reflect the desired operating condition, the current actual operation condition, or both. For example, the display may display characteristics of an asset (individual or group) or a load, such as, for example, a current active power, reactive power, and/or power factor for each asset and/or load on the display. In embodiments, each bus may be displayed along with its status as active as well as displaying the voltage and frequency on the individual bus. In embodiments, the microgrid schematic can be used by a user to manipulate the microgrid via, for example, an input/output device (e.g., a touch screen).

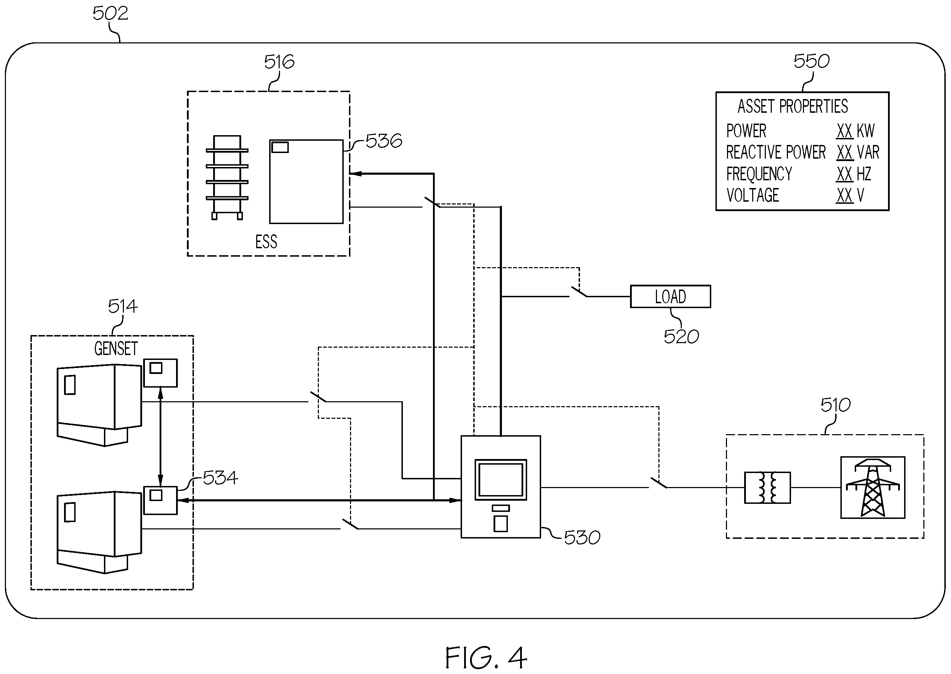

FIG. 4 shows an exemplary microgrid schematic on a display 502. The microgrid schematic could be displayed, for example, on a display in a back end office 138 of FIG. 1A. The microgrid schematic includes a number of icons depicting various features of the exemplary microgrid as configured based on the configuration inputs. In the exemplary display, the exemplary microgrid includes a system controller 530 icon (which can represent graphically, for example, an input/output device for receiving one or more user inputs (e.g., an interface for receiving one or more configuration inputs)), an energy resource group #1 depiction 510, an energy resource group # 3 depiction 514 including a genset controller icon 534, and an energy resource group # 4 depiction 516 including an ESS controller 536. The schematic includes these icons because the microgrid has been configured to have energy resource groups including a genset energy resource group and an ESS energy resource group and to be electrically connected to the public utility grid to power a load 520. This particular set of assets is merely exemplary and any microgrid configured by the system described herein having different and additional components could be displayed. The display 502 further includes an asset properties display 550 that displays properties of an individual asset. For example, the display 550 may display a power, reactive power, frequency, and/or voltage of any asset on the microgrid.

Referring again to FIG. 3, at step 408, operational inputs may be received. The operational inputs can include the output of the microgrid configuration module 222, the mode of operation input 218, and the sensed operational parameters input 220. The sensed operational parameters can include load measurements directly from the individual loads or summations of power provided by the various assets on the microgrid. In some embodiments, the sensed operational parameters input 220 may be compared to one or more control limits of operation. Control limits can be based on signals received including or related to: a finite minimum active power, a power factor, a number of generator starts over a period of time, a battery state of charge (SOC), a battery state of health (SOH), bus voltage, and bus frequency, among others. Because the bus frequency and bus voltage may be maintained by resource controllers, the power produced by the assets is generally equivalent to the load and these values may be used as a check on one another in some embodiments. The system may start/stop assets as necessary based on load and asset requirements and check the operating assets and loads against the asset priorities. Generally, the system will operate to maintain the highest priority assets on a bus while determining whether there are energy storage devices available and/or grid forming capabilities for energy storage assets and non-ES resources.

In some embodiments, the operational inputs may include one or more operational ranges. For example, the output of the microgrid configuration module may send one or more operational power ranges based on the configuration of the microgrid. The operational ranges can include a minimum and maximum operational range (i.e., the minimum and maximum powers at which an asset can function), a minimum and maximum desired range of operation (i.e., the minimum and maximum powers at which the operator would desire the asset to operate), and a sweet spot range of power (i.e., the ideal range of power at which the asset should operate).

At step 410, the microgrid may be operated automatically based on the microgrid configuration 223 provided to the microgrid control module 226. That is, the microgrid controller 130 may send out commands which cause the assets and loads to operate on the microgrid as determined based on the operator's desired operational characteristics determined in the microgrid configuration 223. The microgrid controller 130 may control assets and loads directly or may send commands to a local controller (e.g., an energy resource group controller or an asset controller).

It should now be clear that, based on a generated microgrid configuration and received operational inputs, a system can operate a microgrid automatically. This involves implementing control strategies, algorithms, and decision-making processes to optimize the microgrid's performance. The system may manage energy flow, load balancing, and resource allocation in real-time, continuously adapting to changing conditions and constraints. By operating automatically, the microgrid can respond swiftly to fluctuations in energy supply and demand, maximize efficiency, and ensure the reliable and sustainable operation of the system.

Operating a microgrid control system with a pre-programmed library of asset and load characteristics such as that described herein may avoid the need for customized software while reducing a cost and increasing efficiency of operation of the microgrid. An ability to plug various systems into the microgrid without needing to customize software for each and every asset added to the grid will allow the addition of new and various assets without a need to spend resources developing specific software for each type of new asset and keeping pace with evolving technology. Generic definitions of asset types will further increase efficiency and operational capacity by allowing microgrids to add new assets quickly to respond quickly to changes in load, whether increases or decreases, adding assets rapidly to meet power demands at sites powered by microgrids.

It will be apparent to those skilled in the art that various modifications and variations can be made to the disclosed system without departing from the scope of the disclosure. Other embodiments of the system will be apparent to those skilled in the art from consideration of the specification and practice of the system disclosed herein. It is intended that the specification and examples be considered as exemplary only, with a true scope of the disclosure being indicated by the following claims and their equivalents.

## Claims

1. A method of configuring a microgrid (100) comprising:
receiving configuration inputs (202) from an operator, the configuration inputs (202) including an intended bus structure, a plurality of energy resources data, and energy resources priorities;
classifying assets and asset groups based on the plurality of energy resources data; and
generating a microgrid (100) configuration based on the one or more configuration inputs (202), the microgrid (100) configuration providing for automatic operation of the microgrid (100).

2. The method of claim 1, wherein the configuration inputs (202) further include an operating modes input, the operating modes input including a redundancy mode in which additional assets may be placed on the microgrid (100) than are strictly required for the level of load on the microgrid (100).

3. The method of claim 1, wherein the plurality of energy resources data includes an asset properties input including one or more asset-specific parameters related to the operation of the asset.

4. The method of claim 1, wherein the energy resources priorities includes a ranking of assets in order of priority for distributing power.

5. The method of claim 1, wherein the energy resource priorities include:
an economic mode based on energy cost;
an emissions mode based on carbon emissions; and
a renewables penetration mode based on renewable assets.

6. The method of claim 1, wherein the intended bus structure input (206) data includes data related to the number of energy resources and loads associated with each bus and how the buses are connected to one another.

7. The method of claim 1, wherein the assets or asset groups are classified into one or more types include energy storage assets and non-energy storage assets.

8. The method of claim 7, wherein the non-energy storage asset types are further classified based on running hours, a state of health, and a state of energy estimation.

9. The method of claim 8, further comprising:
based on the generated microgrid (100) configuration, configuring a sweet spot range of power for each of the plurality of asset types, and
operating at least one of the assets to power at least one load with the asset operating in its sweet spot range.

10. The method of claim 9, further comprising:
configuring a cost function map for each of the asset types; and
operating the microgrid (100) such that at least one of the assets is operating at a minimum cost level as determined based on the cost function map of the asset type.
